# EUROPEAN PATENT SPECIFICATION

(11) **EP 0 452 036 B1**
(45) Date of publication and mention of the grant of the patent: **13.12.1995**
(21) Application number: 91302954.2
(22) Date of filing: 04.04.1991
(51) Int. Cl.: G05B 19/04, H05B 37/02

(54) **Multi-point control systems**
Mehrfachsteuerungssysteme
Systèmes à commande multiple

(30) Priority: 11.04.1990 GB 9008176
(43) Date of publication of application: 16.10.1991
(73) Proprietor: WHITECROFT plc, Wilmslow Cheshire SK9 5BX (GB)
(72) Inventor: Payne, David Copplestone, Sandhurst, Camberley GU17 8RN (GB); Moss, David Aaron, Addiscombe, Croydon CO0 6PG (GB)
(74) Representative: Weston, Robert Dale

(56) References cited:
- EP-A- 0 133 840
- EP-A- 0 235 559
- DE-A- 3 031 089
- GB-A- 2 143 966
- GB-A- 2 153 121
- GB-A- 2 187 866

## Description

This invention relates to multi-point control systems for lighting and the like and has particular application for the control of lighting systems.

Economising lighting control systems are used to conserve electricity by controlling the lighting in an installation in response to timed working patterns, ambient light and the like and, by their nature, have to have a reasonable pay back; i.e. the savings to be made have always to be equated against the cost of the control system.

A typical lighting control system operates on a broadcast principle with a central controller transmitting signals to a series of receiver units and all the units responding in the same manner to the control signal; for example to switch a load (such as a light or group of lights) ON or OFF. In an addressable system, the control signals are coded and the receiver units are designed to respond only if the coding of the control signal matches the coding that a given receiver unit has been programmed to accept. In this way individual receiver units can be separately controlled over a common broadcast bus. This facility enables a standard system to be tailored to match the requirements of a given installation and for the response of given receiver units in the system to be changed to allow for alterations to the system or installation.

Such broadcast, addressable, multi-control systems require each receiver unit to be programmed to accept an individual code or set of codes and this is usually done on a set of switches at the receiver. This requires access to each unit for manual operation of switches both during setting-up the system and for any subsequent changes to the coding configuration. In the case of lighting control systems, the receiver units are not always readily accessible (typically a receiver unit is physically associated with a luminaire or group of luminaires in the ceiling or roof of a building) and thus setting-up or subsequent change can be very time consuming.

It is an object of the present invention to provide a multi-point, addressable control system wherein the receiver units can be remotely programmed or re-programmed to respond to different control signal codings in an economic cost-effective manner. Local network systems are known wherein the control software can be amended to re-programme the response of individual, intelligent, terminals or units in the net but this is not a cost-effective solution for economising control of lighting systems and the like.

Document GB 2156556-A (PHILLIPS) discloses a system wherein the address is generated internally within each circuit unit by updating a clock and inhibiting this increment in response to a signal from a receiver unit earlier in the chain; this results in sequential addresses being generated.

Document GB 2180972-A (PHILLIPS) discloses a system wherein each unit modifies the signal passed to a subsequent unit. Neither system is described as being particularly suitable as a lighting control system.

According to the present invention, a multi-point, addressable control system for lighting and the like comprises a central controller connected by a bus to a plurality of receiver units, each unit being programmed to control an associated load in response to control signals transmitted from the central controller over the bus and addressed to that unit; wherein:-
the units are serially connected to the bus;
each unit is provided with a programmable memory;
each unit is provided with an initially open-circuit, remotely-operable, down-link bus isolating switch; and,
the central controller is arranged to transmit address codes and isolating switch operation signals on the bus
whereby the memory of each unit can be sequentially accessed by the central controller in serial order of the units and instructed to store its address code and the isolating switch then ordered to close and thereby enable the next unit in the series to be accessed by the central controller.

The control system in accordance with the present invention therefore differs from the systems of the above-referenced documents in that units are sequentially accessed and each instructed to store it s address code; address codes need not be sequential and, furthermore, several units can be given the same address code for group operations. Even though this system is limited to programming or re-programming receiver units in the order in which they are serially connected to the bus, it nevertheless has considerable installation and operative advantages over multi-point addressable systems previously used to control lighting installations.

In a preferred embodiment of the present invention, a continuous signal bus and a serial configuration bus are provided, the central controller is arranged to transmit addressed control signals on the signal bus and address codes and isolating switch operation signals on the configuration bus, and the receiver units are:-
each separately linked to the signal bus;
serially linked to the configuration bus;
each have their programmable memories operatively connected to the configuration bus; and,
each have their down-link switches arranged to isolate only the configuration bus.

In this embodiment it is only the configuration bus that can be isolated by the down-link switch in its receiver unit and this ensures that failure of a single receiver unit would not disable all the other receiver units serially down stream of the failed unit as the normal command signals are sent over the signal bus.

The above and other features of the present invention are illustrated, by way of example, in the accompanying drawings wherein:-
Figure 1 is a schematic of a multi-point addressable control system in accordance with the present invention and,
Figure 2 is a block diagram illustrating the configuration of a receiver unit.

As shown by the drawings a multi-point addressable control system consists of a central controller 1 arranged to transmit addressed, control signals on a signal bus 2 and programming and down-link isolating switch command signals on a configuration bus 3. Receiver units R₁, R₂, R₃, R₄, R₅ etc. are each separately connected to the signal bus 2 and are serially linked to the configuration bus 3. Each receiver unit has a programmable memory 4 operatively connected to the configuration bus and to a load controller 5 that is connected to receive control signals over the signal bus 2 and to control a load 6.

Each receiver also has a down-link switch S₁, S₂, S₃, S₄, S₅ respectively connected to switch the configuration bus so as to isolate any given receiver unit from those receiver units serially downstream therefrom. The down-link switches are remotely operable in response to command signals output from the central controller 1 over the configuration bus 3.

In operation, on powering up of the system all the receiver units are initialised in a state ready to receive configuration information over the configuration bus 3 and with the down-link isolating switch S open, thus breaking the configuration bus 3 and only allowing the first receiver unit in the series to receive configuration information.

The central controller 1 can then send a message on the configuration bus 3 giving the first receiver unit its individual code. For multiple function operation more than one acceptable code may be utilised. The receiver unit stores the codes internally, in memory 4, and then changes to normal operating mode, in which it will no longer respond to inputs on the configuration bus, and then closes its related down-link isolating switch S. This permits signals on the configuration bus 3 to reach the second receiver unit R₂, which can be configured in the same way. In this manner all the receiver units can be sequentially configured each with its own individual codes. When this sequence has been completed, all the receiver units will respond to their own codes received on the signal bus 2 to control their associated loads 6.

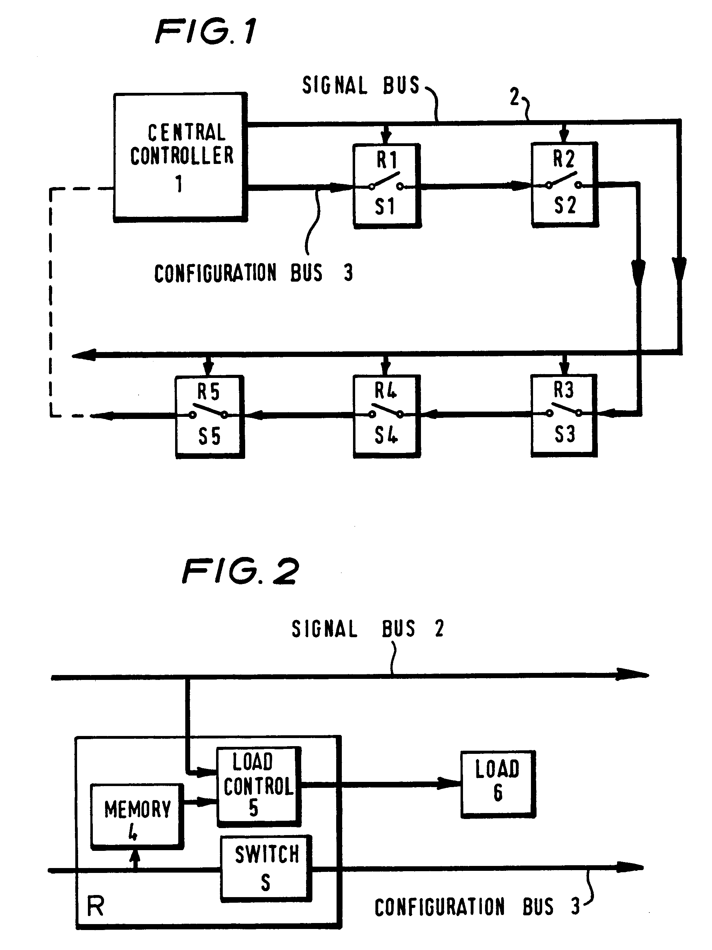

For additional security, the signal bus and the configuration bus can either or both be configured as a ring with a return connection to the central controller 1, as indicated in broken line in figure 1 for the configuration bus 3. The central controller can then detect when all receiver units have been configured. In the event of a break in a bus, or a receiver unit failure, this confirmation will not occur and an alarm can be initiated. The central controller can then configure in the reverse direction to minimise the effect of such a failure.

It is also possible to use the configuration sequence as an integrity check without damaging the receiver units' individual codes. To overcome the need to reconfigure the system after every power down the codes could be stored in non-volatile memory. For example if each memory 4 were an EPROM the configuration need only be carried out once, during system commissioning, after successfully completing an integrity check. Any subsequent re-programming of the system, either in total or of individual receiver units could be achieved by erasing the memories and re-programming accordingly.

Once configuration of a system has been completed, the configuration bus 3 could be used for return messages from a receiver unit to the central controller 1; for example for message acknowledgement or status indication.

Additionally special receiver units may be used to monitor local load switches, or sensors and signal status to the central controller over the configuration bus either on status change, or when polled by the central controller.

## Claims

1. A multi-point, addressable control system for lighting and the like comprising a central controller (1) connected by a bus (3) to a plurality of receiver units (R1...R5), each unit being programmed to control an associated load (6) in response to control signals transmitted from the central controller over the bus and addressed to that unit characterised in that:-
the units (R1...R5) are serially connected to the bus (3);
each unit is provided with a programmable memory (4);
each unit is provided with an initially open, remotely-operable, down-link bus isolating switch (S1...S5); and,
the central controller (1) is arranged to transmit address codes and isolating switch operation signals on the bus
whereby the memory of each unit can be sequentially accessed by the central controller in the serial order of the units and instructed to store its address code and the isolating switch then ordered to close and thereby enable the next unit in the series to be accessed by the central controller.

2. A control system as claimed in Claim 1 and further characterised in that a continuous signal bus (2) and a serial configuration bus (3) are provided, the central controller (1) is arranged to transmit addressed control signals on the signal bus and address codes and isolation switch operation signals on the configuration bus and the receiver units (R1...R5) are:-
each separately linked to the signal bus;
serially linked to the configuration bus;
each have their programmable memories (4) operatively connected to the configuration bus; and,
each have their isolation switches (S1...S5) arranged to isolate only the configuration bus.

3. A control system as claimed in Claim 1 or Claim 2 and further characterised in that the or each bus (2,3) is configured as a ring with a return connection to the central controller (1).

4. A control system as claimed in Claim 2 or Claim 3 and further characterised in that the programmable memory (4) of each receiver unit (R1...R5) is operatively connected to a load controller (5), the load controller is operatively connected to the signal bus (2) and is configured to control a load (6), whereby a given load can be controlled in response to control signals transmitted by the central controller on the signal bus and addressed to the receiver unit for that load.

5. A control system as claimed in any on claims 1 to 4 and further characterised in that each programmable memory (4) is non-volatile.

## Patentansprüche

1. Adressierbares Mehrpunkt-Steuersystem für Beleuchtungen und dergleichen, mit einem zentralen Kontroller (1), der durch einen Bus (3) an eine Vielzahl von Empfängereinheiten (R₁...R₅) angeschlossen ist, wobei jede Einheit so programmiert ist, daß sie eine zugehörige Last als Antwort auf Steuersignale steuert, die vom zentralen Kontroller über den Bus übertragen werden und an die betreffende Einheit gerichtet sind, dadurch gekennzeichnet, daß
- die Einheiten (R₁...R₅) seriell an den Bus (3) angeschlossen sind;
- jede Einheit mit einem programmierbaren Speicher (4) versehen ist;
- jede Einheit mit einem anfänglich offenen, fernbetätigten Abwärtsstreckenbus-Trennschalter (S₁...S₅) versehen ist; und
- der zentrale Kontroller (1) so ausgelegt ist, daß er Adreßcodes und Trennschalter-Betätigungssignale auf den Bus sendet;
wodurch der Speicher jeder Einheit sequentiell durch den zentralen Kontroller in der seriellen Reihenfolge der Einheiten angesteuert und angewiesen werden kann, seinen Adreßcode zu speichern, und dann dem Trennschalter befohlen wird, sich zu schließen und dadurch die nächste Einheit in der Abfolge in die Lage versetzt, vom zentralen Kontroller angesteuert zu werden.

2. Steuersystem nach Anspruch 1, weiter dadurch gekennzeichnet, daß ein durchgehender Signalbus (2) und ein serieller Konfigurationsbus (3) vorgesehen sind; daß der zentrale Kontroller (1) so ausgelegt ist, daß er adressierte Steuersignale auf den Signalbus und Adreßcodes sowie Trennschalter-Betätigungssignale über den Konfigurationsbus sendet; und daß die Empfängereinheiten (R₁...R₅):
- jeweils getrennt an den Signalbus angeschlossen sind;
- seriell an den Konfigurationsbus angeschlossen sind;
- jeweils ihren programmierbaren Speicher (4) operativ an den Konfigurationsbus angeschlossen haben;
- jeweils ihren Trennschalter (S1...S5) so angeordnet haben, daß nur der Konfigurationsbus abgetrennt wird.

3. Steuersystem nach Anspruch 1 oder 2, weiter dadurch gekennzeichnet, daß der bzw. jeder Bus (2, 3) als Ring konfiguriert ist, mit einem Rückanschluß an den zentralen Kontroller (1).

4. Steuersystem nach Anspruch 2 oder 3, weiter dadurch gekennzeichnet, daß der programmierbare Speicher (4) jeder Empfängereinheit (R₁...R₅) operativ an einen Lastkontroller (5) angeschlossen ist; daß der Lastkontroller operativ an einen Signalbus (2) angeschlossen und so konfiguriert ist, daß er eine Last (6) steuert, wodurch eine gegebene Last als Antwort auf Steuersignale gesteuert werden kann, die vom zentralen Kontroller über den Signalbus gesendet und an die Empfängereinheit für die betreffende Last adressiert werden.

5. Steuersystem nach irgendeinem der Ansprüche 1 bis 4, weiter dadurch gekennzeichnet, daß jeder programmierbare Speicher (4) ein nicht flüchtiger Speicher ist.

## Revendications

1. Installation adressable à commande multiple pour l'éclairage et l'analogue comprenant un dispositif de commande central (1) raccordé par un bus (3) à une multiplicité d'unités réceptrices (R1 ... R5), chaque unité étant programmée pour commander une charge associée (6) en réponse à des signaux de commande émis par le dispositif de commande central sur le bus et adressés à ladite unité, caractérisée en ce que :
les unités (R1 ... R5) sont raccordées en série au bus (3);
chaque unité est équipée d'une mémoire programmable (4);
chaque unité est équipée d'un interrupteur d'isolation de la section aval du bus (S1 ... S5), initialement ouvert et actionnable à distance; et
le dispositif de commande central (1) est agencé pour émettre des codes d'adresses et des signaux d'actionnement des interrupteurs d'isolation sur le bus,
d'où il résulte que le dispositif de commande central peut accéder séquentiellement à la mémoire de chaque unité dans l'ordre sériel des unités, que la mémoire de chaque unité peut recevoir une instruction pour stocker son code d'adresse et que l'interrupteur d'isolation peut ensuite recevoir un ordre pour se fermer, ce qui permet ainsi au dispositif de commande central d'avoir accès à l'unité suivante dans la série.

2. Installation de commande selon la revendication 1, caractérisée en outre en ce qu'il est prévu un bus continu de signaux (2) et un bus de configuration sérielle (3), que le dispositif de commande central (1) est agencé pour émettre des signaux de commande adressés sur le bus de signaux et des signaux de codes d'adresses et des signaux d'actionnement des interrupteurs d'isolation sur le bus de configuration et en ce que les unités réceptrices (R1 ... R5) :
sont reliées chacune séparément au bus de signaux;
sont reliées en série au bus de configuration;
ont chacune leurs mémoires programmables (4) raccordées fonctionnellement au bus de configuration; et
ont chacune leurs interrupteurs d'isolation (S1 .. S5) agencés pour isoler seulement le bus de configuration.

3. Installation de commande selon la revendication 1 ou la revendication 2, caractérisée en outre en ce que le ou chaque bus (2, 3) est configuré en un anneau avec un raccordement de retour au dispositif de commande central (1).

4. Installation de commande selon la revendication 2 ou la revendication 3, caractérisée en outre en ce que la mémoire programmable (4) de chaque unité réceptrice (R1 ... R5) est fonctionnellement raccordée à un dispositif de commande de charge (5), que le dispositif de commande de charge est fonctionnellement raccordé au bus de signaux (2) et est configuré pour commander une charge (6), d'où il résulte qu'une charge donnée peut être commandée en réponse à des signaux de commande émis par le dispositif de commande central sur le bus de signaux et adressés à l'unité réceptrice pour cette charge.

5. Installation de commande selon l'une quelconque des revendications 1 à 4, caractérisée en outre en ce que chaque mémoire programmable (4) est non-volatile.
